# EUROPEAN PATENT APPLICATION

(11) **EP 4 755 747 A1**
(43) Date of publication of application: **10.06.2026**
(21) Application number: 25196654.5
(22) Date of filing: 19.08.2025
(51) Int. Cl.: B60W 40/08, B60W 50/14, B60K 6/00

(54) **VEHICLE AND METHOD FOR CONTROLLING THE SAME**

(30) Priority: 06.12.2024 KR 20240180464
(71) Applicant: Hyundai Motor Company, Seoul 06797 (KR); Kia Corporation, Seoul 06797 (KR)
(72) Inventor: PARK, Se Young, 18280 Hwaseong-si, Gyeonggi-do (KR); KIM, Su Hyun, 18280 Hwaseong-si, Gyeonggi-do (KR); CHOI, Eun Young, 18280 Hwaseong-si, Gyeonggi-do (KR); LEE, Jin Ug, 18280 Hwaseong-si, Gyeonggi-do (KR)
(74) Representative: Viering, Jentschura & Partner mbB Patent- und Rechtsanwälte

(57) **Abstract**

A vehicle and a method for controlling the same are disclosed. A control device includes a processor; and a memory storing at least one instruction that is configured, when executed by the processor communicating with the memory, to cause the control device to: detect, during driving control of a vehicle, an event associated with an eyes-on request (EOR) for a driver of the vehicle; determine, based on the event satisfying a predetermined driving condition of the vehicle and via an image sensor of the vehicle, that an eye gaze of the driver is diverted to a predetermined area of the vehicle; set, based on a time duration of the eye gaze of the driver being diverted to the predetermined area, a timer for an EOR alert; and output, based on expiration of the timer, the EOR alert via an output device of the vehicle. An expiration of the timer is associated with the predetermined area. The output device includes at least one of a display of the vehicle or a speaker of the vehicle.

## Description

### CROSS-REFERENCE TO RELATED APPLICATION

This application claims priority to Korean Patent Application No. 10-2024-0180464, filed December 6, 2024 in the Korean Intellectual Property Office, the disclosure of which is incorporated herein by reference in its entirety.

### FIELD OF TECHNOLOGY

The present disclosure relates to vehicle control, and more specifically driver assistance technologies.

### BACKGROUND

With the development of autonomous driving technology, an eyes-on request (EOR) function, which monitors a driver's attention state, may help ensure safety of the driver and the passengers. The EOR function may induce driver's attention through an alert if a driver fails to look forward for more than a certain period of time.

However, at least some implementations of the EOR system may have a limitation in that the system determines a driver's attention state only based on a fixed criterion.

The matters described in this Background section are only for enhancement of understanding of the background of the disclosure, and should not be taken as acknowledgement that they correspond to prior art already known to those skilled in the art.

### SUMMARY

The present disclosure has been made to solve the problems found in at least some implementations of the eyes-on request (EOR) system, and is directed to simultaneously improving convenience and safety of a driver's driving by setting driver's permitted attention area(s) according to various driving situations during an operation of an autonomous driving system and withholding an EOR warning when necessary.

The problems to be solved by the present disclosure are not limited to the problems that are mentioned above, and other problems that have not been mentioned can be clearly understood by those skilled in the art from the description below.

According to one or more example embodiments of the present disclosure, a control device may include: a processor; and a memory storing at least one instruction. The at least instruction may be configured, when executed by the processor communicating with the memory, to cause the control device to: detect, during driving control of a vehicle, an event associated with an eyes-on request (EOR) for a driver of the vehicle; determine, based on the event satisfying a predetermined driving condition of the vehicle and via an image sensor of the vehicle, that an eye gaze of the driver is diverted to a predetermined area of the vehicle; set, based on a time duration of the eye gaze of the driver being diverted to the predetermined area, a timer for an EOR alert; and output, based on expiration of the timer, the EOR alert via an output device of the vehicle. An expiration of the timer may be associated with the predetermined area. The output device may include at least one of a display of the vehicle or a speaker of the vehicle.

The predetermined driving condition may include a condition in which the driver is permitted to divert the eye gaze from a front of the vehicle to the predetermined area of the vehicle.

The predetermined area of the vehicle may include at least one of: a side mirror of the vehicle, a rearview mirror, an input interface, the output device, or a direction of attention on an object adjacent to the vehicle.

The at least one instruction may be configured, when executed by the processor communicating with the memory, to further cause the control device to: pause, for the time duration, the timer.

The at least one instruction may be configured, when executed by the processor communicating with the memory, to further cause the control device to: pause the timer for a lesser of: the time duration and a maximum withholding time limit.

The at least one instruction may be configured, when executed by the processor communicating with the memory, to further cause the control device to: determine, based on the predetermined area, the maximum withholding time limit.

The at least one instruction may be configured, when executed by the processor communicating with the memory, to further cause the control device to: perform one of: starting the timer at an end of the time duration; or pausing the timer for the time duration and resuming the timer at the end of the time duration.

The at least one instruction may be configured, when executed by the processor communicating with the memory, to further cause the control device to: output, via a user interface of the vehicle, a remaining duration of the timer.

The at least one instruction may be configured, when executed by the processor communicating with the memory, to cause the control device to set the timer by: setting the timer further based on a driving history of the driver.

The at least one instruction may be configured, when executed by the processor communicating with the memory, to further cause the control device to: set, based on detecting one or more predetermined events, a second timer, for a second EOR alert, to a predetermined time; and output, based on expiration of the second timer, the second EOR alert.

The at least one instruction may be configured, when executed by the processor communicating with the memory, to further cause the control device to: perform, at a start of the time duration, one of: resetting the timer or pausing the timer.

According to one or more example embodiments of the present disclosure, a method performed by an apparatus of a vehicle may include: detecting, during driving control of the vehicle, an event associated with an eyes-on request (EOR) for a driver; determining, based on the event satisfying a predetermined driving condition of the vehicle and via an image sensor of the vehicle, that an eye gaze of the driver is diverted to a predetermined area of the vehicle; setting, based on a time duration of the eye gaze of the driver being diverted to the predetermined area, a timer for an EOR alert; and output, based on expiration of the timer, the EOR alert via an output device of the vehicle. An expiration of the timer may be associated with the predetermined area. The output device may include at least one of a display of the vehicle or a speaker of the vehicle.

The predetermined driving condition may include a condition in which the driver is permitted to divert the eye gaze from a front of the vehicle to the predetermined area of the vehicle.

The method may further include: pausing, for the time duration, the timer. The predetermined area of the vehicle may include at least one of: a side mirror of the vehicle, a rearview mirror, an input interface, the output device, or a direction of attention on an object adjacent to the vehicle.

The method may further include: pausing the timer for a lesser of: the time duration and a maximum withholding time limit.

The method may further include: determining, based on the predetermined area, the maximum withholding time limit.

The method may further include: performing one of: starting the timer at an end of the time duration; or pausing the timer for the time duration and resuming the timer at the end of the time duration.

The method may further include: outputting, via a user interface of the vehicle, a remaining duration of the timer.

Setting the timer may include: setting the timer further based on a driving history of the driver.

The method may further include: setting, based on detecting one or more predetermined events, a second timer, for a second EOR alert, to a predetermined time; and outputting, based on expiration of the second timer, the second EOR alert.

### BRIEF DESCRIPTION OF THE DRAWINGS

The above and other objects, features and advantages of the present disclosure will become more apparent to those of ordinary skill in the art by describing one or more example embodiments thereof in detail with reference to the accompanying drawings, in which:
FIG. 1 is a block diagram of an example vehicle.
FIG. 2 is a flowchart of an example control operation related to an eyes-on request (EOR).
FIG. 3 is a perspective view of an example vehicle that includes one or more predetermined areas permitted for viewing.
FIG. 4 is a flowchart of an example control operation related to the EOR.
FIG. 5, FIG. 6, and FIG. 7 are time diagrams of an example control operation related to the EOR.
FIG. 8 is a flowchart of an example control operation related to the EOR.
FIG. 9 is a table showing example maximum withholding times.
FIG. 10 is a flowchart of an example control operation related to the EOR.

### DETAILED DESCRIPTION

Hereinafter, one or more example embodiments of the present disclosure will be described in detail with reference to the accompanying drawings.

However, the technical idea of the present disclosure is not limited to the example embodiment(s) that will be described, but may be implemented in various different forms, and one or more of the components in the example embodiment(s) may be selectively combined or substituted and used without departing from the scope of the technical idea of the present disclosure.

Further, terms (including technical and scientific terms) used in the example embodiment(s) of the present disclosure may be construed as having meanings that can be generally understood by those skilled in the art to which the present disclosure belongs, unless explicitly and specifically defined and described, and meanings of terms that are commonly used, such as terms defined in a dictionary, may be construed based on contextual meaning of the related field.

In addition, the terms used in the example embodiment(s) of the present disclosure are intended to describe the example embodiment(s) and are not intended to limit the present disclosure.

In the present specification, a singular form may include a plural form unless the context clearly indicates otherwise, and when "at least one (or one or more) of A, B, and C" is described, this may include one or more of all combinations of A, B, and C.

In addition, terms such as "first," "second," "A," "B," "(a)," and "(b)" may be used to describe components in the example embodiment(s) of the present disclosure.

These terms are only intended to distinguish the component from other components, and do not limit the nature, order, or sequence of the component.

For purposes of the present application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

When a component is described as being "connected," "coupled," or "joined" to another component, this may include not only a case where the component is directly connected, coupled, or joined to the other component, but also a case where the component is "connected," "coupled," or "joined" to the other component by still another component between the component and the other component.

Further, when one component is described as being formed or disposed "on or under" another component, the term "on or under" includes not only a case in which two components are in direct contact with each other, but also a case in which one or more other components are formed or disposed between the two components. In addition, when the term "on or under" is expressed, this may mean not only an upward direction but also a downward direction with respect to one component.

In various flowcharts of the present disclosure, at least some steps may be omitted or the order of the steps may be changed, and one or more example embodiments of the present disclosure may be performed at a specific point in time in each step of the flowchart. The various flowcharts of the present disclosure may be performed by at least one of a control device 100, a processor 130, and a vehicle 10, or any other device or component described in the present disclosure. Further, redundant content in the drawings of the present disclosure may be omitted.

A "driver control assistance system as used herein may refer to hardware and/or software that can help a driver continuously control longitudinal and lateral movements of a vehicle. This driver control assistance system may refer to a "system" in the present disclosure.

A "feature" as used herein may refer to any function of a specific vehicle system that is capable of assisting a driver in a defined traffic scenario, situation, and system boundary.

A "dynamic control" as used herein may refer to performance of operational and/or tactical functions required to move a vehicle in real time. This may include control of lateral and longitudinal movements of the vehicle, monitoring of a road environment, coping with events in a road traffic environment, operation plans, signal transmission, and the like.

A "system boundaries" as used herein may refer to verifiable or measurable limits or conditions set by a manufacturer. A system boundary may be a condition that affects a system designed to help a driver, or functions of the system, and the ability of the system operating as intended, or settings within the range of the conditions.

"Driver attention," "attention level," or "attention state" as used herein may also be referred to as a driver's gaze (e.g., eye gaze) concentration level or a visual attention state. These terms may describe how attentive the driver is to the task of driving a vehicle without being distracted by non-driving-related tasks. The attention level may be measured and/or determined, for example, based on the direction and/or movement of the driver's eye gaze (e.g., whether the driver's eye gaze stays on the road ahead (e.g., in front of the vehicle) or any other permitted areas in the driver's field of vision) over the course of a driving session.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., tracking the driver's attention level) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., tracking the driver's attention level) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., tracking the driver's attention level) described herein.

Minimum risk maneuver (MRM) operation(s) may also be controlled, for example, based on one or more features (e.g., tracking the driver's attention level) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., tracking the driver's attention level) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

An autonomous driving level and/or autonomous driving activation/deactivation may also be controlled, for example, based on one or more features (e.g., tracking the driver's attention level) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents may not be displayed on a display of the vehicle.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., tracking the driver's attention level) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, driver warning control, autonomous driving operational design domain (ODD), etc.). For example, an operation control may include, based on the driver's attention level, outputting an alert or warning (e.g., an audible alert, a visual alert, a haptic alert, etc.) to the driver and/or disengaging an autonomous driving mode of the vehicle.

The vehicle that an autonomous driving system is actively controlling may be referred to as an ego vehicle, a host vehicle, or an autonomous vehicle. The ego vehicle may also be referred to as a self-driving car, an autonomous car (AC), a driverless car, a robotaxi, a robotic car, or a robo-car. The ego vehicle may be the vehicle that is equipped with the autonomous driving system. A car that is ahead of the ego vehicle (e.g., in the same driving lane as the ego vehicle) may be referred to as a vehicle in front (e.g., a vehicle directly in front), a vehicle ahead (e.g., a vehicle directly ahead), a lead vehicle, a leading vehicle, or a preceding vehicle. A car that follows the ego vehicle (e.g., in the same driving lane as the ego vehicle) may be referred to as a car behind, a trailing vehicle, a following vehicle, or a succeeding vehicle. An adjacent vehicle may refer to any vehicle located in any direction (e.g., front, rear, left, right, diagonal, etc.) from the ego vehicle as long as no other vehicles (e.g., intervening vehicles) exist between it and the ego vehicle (e.g., regardless of the distance from the ego vehicle). Alternatively, in some contexts, only those vehicles that are located within a threshold distance (e.g., line of sight and/or detection limit of one or more sensors of the ego vehicle) from the ego vehicle may be referred to as adj acent vehicles. A target vehicle may be any vehicle that is near the ego vehicle (e.g., within a threshold distance away from the ego vehicle). The target vehicle may be any vehicle that the autonomous driving system monitors, recognizes, identifies, tracks, and/or analyzes, either actively or passively, either once or multiple times, and either sporadically or continuously. The threshold distance may be, for example, the line of sight and/or the detection limit of one or more sensors of the ego vehicle, but the threshold distance may be a value (e.g., an adjustable value) that is less than the line of sight and/or the detection limit of the one or more sensors of the ego vehicle. The target vehicle can be, for example, a vehicle in front, a vehicle behind, a vehicle in a different lane than the driving lane of the ego vehicle (e.g., a vehicle to the left, a vehicle to the right, a vehicle in a diagonal direction, etc.), and/or an adjacent vehicle (e.g., regardless of the distance from the ego vehicle and/or regardless of whether there are intervening vehicle(s) between the target vehicle and the ego vehicle). A target vehicle may also be referred to as a surrounding vehicle, a nearby vehicle, an external vehicle, another vehicle (other vehicles), and so forth.

Hereinafter, one or more example embodiments will be described in detail with reference to the accompanying drawings, the same or corresponding components will be denoted by the same reference numbers throughout drawings, and redundant descriptions thereof will be omitted.

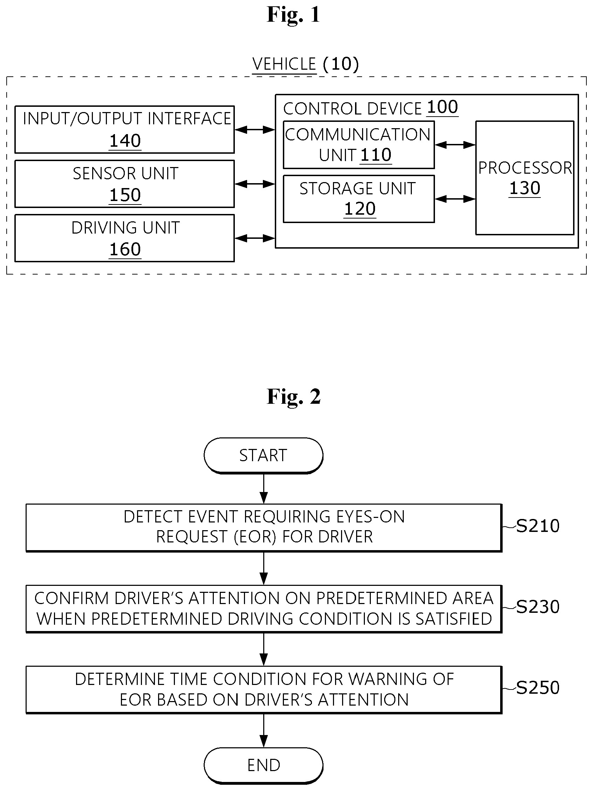

FIG. 1 is a block diagram of an example vehicle.

A vehicle 10 may include a control device 100, a communication unit 110, a storage unit 120, a processor 130, an input/output interface (also referred to as an input and output interface)140, a sensor unit 150, and a driving unit 160. Each of these components of FIG. 1 may be implemented inside the vehicle.

The control device 100 may be formed integrally with internal components of the vehicle, may be implemented as an independent device separately from the other components inside the vehicle 10, and may perform communication with the internal components of the vehicle through various connection means (for example, a CAN bus, a wireless network, and a wired connection). The control device 100 may include the communication unit 110, the storage unit 120, and the processor 130 to control the vehicle, and may further include other components such as the input/output interface 140, the sensor unit 150, and the driving unit 160 to perform a complex control function depending on a driving situation.

The control device 100 serves to manage various functions of a vehicle system and generate a control signal suitable for a driving situation. For example, the control device 100 may collect data of sensors inside the vehicle, including driver attention information, to monitor whether the driver is maintaining an appropriate attention state during driving.

Further, the control device 100 may control a warning of an eyes-on request (EOR) according to the attention state, and temporarily withhold an unnecessary warning even when the driver's attention (e.g., eye gaze) moves to a specific (e.g., predetermined) area other than the front in a specific driving situation.

The EOR request may be, for example, feedback (e.g., a message, an alert, a warning, a notification, etc.) to the user to induce the user to pay attention to the driving task by maintaining visual focus or attention (e.g., an eye gaze) on the road ahead (e.g., by looking out through the windshield). The EOR may also refer to the system or feature that implements such feedback. The EOR feedback may be audible (e.g., an audible alert, a voice announcement, etc.), visual (e.g., a display message, a warning light, etc.), and/or tactile (e.g., haptic feedback, vehicle seat vibration, steering wheel vibration, seat belt vibration, etc.). An activity that is associated with the driver's visual inattentiveness may be referred to as an EOR event. An EOR event may include, for example, the driver looking away (e.g., moving the driver's visual focus away) from the front of the vehicle (e.g., away from the road ahead and/or away from looking out through the windshield). If an EOR event is detected, the control device 100 may trigger (e.g., start) a timer (also referred to as an EOR timer or an EOR warning timer) for a predetermined time duration (e.g., a timer value). If the EOR event does not end until the timer expires, the control device 100 may issue (e.g., output) EOR feedback, such as a message, an alert, a warning, a notification, etc. If, however, the EOR event does end before the timer expires (e.g., counts down to zero and no subsequent EOR event occurs for at least a threshold time amount), the control device 100 may stop the timer and/or reset (e.g., initialize) the timer for any future EOR event. If the EOR event ends but resumes (or another EOR event occurs) within a threshold time amount, the control device 100 may resume the timer without resetting the timer.

At least some implementations of the EOR system may have a limitation in that the system determines a driver's attention state only based on a fixed criterion, such as requiring a forward eye gaze. Enforcing such a rigid criterion may cause generation of unnecessary alerts in certain situations, such as a lane change or an encounter with an emergency.

Thus, in certain driving situations, the driver may need to look in a direction other than forward, but at least some implementations of the system may have a problem in that the system is incapable of accounting for some of these exceptional circumstances but instead issues alerts that are unwarranted.

Further, the control device 100 may communicate with the vehicle's internal and external systems through the communication unit 110 to exchange driving information in real time, and store and manage driving data and setting information through the storage unit 120. The processor 130 may analyze collected data to control an operation of each component, and may provide state information of the autonomous driving system or a driving assistance system to a user through the input/output interface 140, if necessary.

The communication unit 110 may perform communication with other control devices inside the vehicle to share inter-system data or transmit or receive various types of information through a connection to the outside of the vehicle. The communication unit 110 may transmit control signals and data between the internal components using various in-vehicle communication schemes such as CAN communication and Ethernet, and may link driving information and external data in real time through communication with a user terminal, another vehicle (vehicle-to-vehicle (V2V)), infrastructure (vehicle-to-infrastructure (V2I)), or an external server.

The communication unit 110 may perform short-range communication, GPS signal reception, vehicle-to-everything (V2X) communication, optical communication, broadcast transmission and reception, and intelligent transport systems (ITS) communication functions, and may support stable data transmission in a short range using wireless communication technology such as Bluetooth, radio frequency identification (RFID), Infrared Data Association (IrDA), ultra wideband (UWB), ZigBee, near field communication (NFC), Wi-Fi, Wi-Fi Direct, and wireless USB. Further, the communication unit 110 may include a mobile communication module based on a mobile communication network (LTE, 5G, and the like) and a wireless Internet module for access to wireless Internet to receive real-time data through long-range communication and improve the performance of the autonomous driving system in conjunction with a cloud.

The storage unit 120 may include various types of memories capable of storing data, and may be integrated into the control device 100 or the processor 130 or configured in the form of a separate module. The storage unit 120 may include a nonvolatile memory (e.g., a hard disk drive, a flash memory, an electrically erasable programmable read only memory (EEPROM), a static random access memory (SRAM), a ferroelectric random access memory (FRAM), a phase-change random access memory (PRAM), or a magnetoresistive random access memory (MRAM)) and/or volatile memory (e.g., a random access memory (RAM), a dynamic RAM (DRAM), a synchronous DRAM (SDRAM), or a double data rate SDRAM (DDR-SDRAM)), which may be combined to implement memory systems with various capacities and performances.

The storage unit 120 may store setting information related to vehicle control and the driving assistance system, the driver's driving habit data, warning occurrence records, and data related to the driver's attention state. The data may support efficient operation of the vehicle system and may include records related to events occurring during driving and the driver's responses for utilization in subsequent analysis.

For example, the storage unit 120 may store information on a setting of the warning related to the EOR for the driver, a maximum warning withholding time (also referred to as a maximum warning hold time), and an area where the driver looks, so that a warning criterion can be flexibly adjusted according to a driving situation.

Further, the storage unit 120 may support learning driving records and a user's driving patterns and setting an eyes-on determination criterion according to the driver's driving style.

The processor 130 may communicate with the communication unit 110, the storage unit 120, the input/output interface 140, the sensor unit 150, the driving unit 160, and various internal components of the vehicle 10 through electrical or operational connections, and may control an operation of each component and perform data processing. The processor 130 is a central processing unit for command execution and data calculation, and may collect, process, and analyze data in real time according to a driving environment of the vehicle to perform vehicle control.

The processor 130 may be implemented in the form of hardware, software, or a combination thereof, and may perform vehicle control logic in the form of, for example, a microcontroller, an FPGA, or an ASIC. Further, the processor 130 may include a multi-processor configuration for controlling complex autonomous driving and a driver assistance system. Such a processor configuration may support comprehensive control and stable performance of the vehicle through autonomous driving and assistance system execution, sensor data processing, communication data management, and driving-related determination functions.

The input/output interface 140 serves to receive input related to vehicle control from the user and transfer a vehicle control state and system operation information to the user.

The input/output interface 140 may perform a function of receiving various inputs from the user and transferring the vehicle control state to the user. The input/output interface 140 may include one or more user interfaces (e.g., one or more input interfaces and/or one or more output devices).

The input interface may include physical buttons, soft keys on a touch display, a voice recognition function, a gesture recognition function, and the like, and this allows the user to input commands, for example, to request activation of the autonomous driving system, switch between functions, or set driving assistance.

The output device includes a display, an audio module (e.g., a speaker), a haptic module, and the like, and may provide the user with a state of the autonomous driving system, a control switching request notification, whether or not a function is activated, and the like in a visual, auditory, or tactile form.

For example, when the driver is not looking forward in a situation in which the EOR is required, a warning message may be displayed on a cluster or a head-up display (HUD), a warning sound may be played through a speaker, and a vibration may be generated on a steering wheel through a haptic module to induce immediate attention. Such multi-sensory feedback helps the driver respond rapidly to a driving situation.

The input/output interface 140 may perform the role of transmitting a state and warning information of the vehicle system to the driver and receiving an input from the driver. The input/output interface 140 may include various output device such as a display screen, a speaker, a haptic feedback device, and the like to provide visual, auditory, and tactile information to the driver. For example, when a warning of an EOR is activated, a warning message may be displayed through the cluster or the HUD or a voice warning may be transmitted through the speaker.

Further, the input/output interface 140 may receive a driver input through a touchscreen, physical buttons such as switches, a voice recognition system, and the like. This allows the driver to transmit a command to the vehicle system, for example, to activate an autonomous driving function, to change a warning setting, and to release a warning.

Further, the state of the autonomous driving system may be intuitively confirmed through the HUD, the cluster, an audio video navigation (AVN), and a display built into a rearview mirror or a side mirror. Further, the state of the autonomous driving system can be confirmed through a display of a console installed in each row of the vehicle 10, an application of a user terminal, and the like

The input/output interface 140 may output a state related to a count for the EOR (e.g., a remaining duration of the EOR timer) for a driver under the control of the processor 130.

The sensor unit 150 may include one or more sensors that detect various types of driving and environmental information in real time to support stable operation of an autonomous driving and driver assistance system. The sensor unit 150 may measure a distance to and speed of a nearby object through long-range detection sensors such as radio detection and ranging (RADAR) and light detection and ranging (LiDAR), and may detect objects near the vehicle 10 by including an ultrasonic sensor.

The sensor unit 150 may include a camera. The camera can be classified into an external camera and an internal camera. The external camera may recognize a road and a surrounding environment, and the internal camera may detect a driver's condition (e.g., eye tracking or drowsiness detection) or an interior situation to comprehensively ascertain situations inside and outside the vehicle. For example, the camera may detect a visual focus (e.g., eye gaze) of the driver. The sensor unit 150 may include a heart rate sensor, a pressure sensor, an infrared sensor, and the like to collect the driver's biometric information or various types of environmental data.

The sensor unit 150 may collect data required to satisfy an EOR condition by monitoring the autonomous driving function of the vehicle and a driver's attention state. For example, the internal camera may track the driver's attention direction to detect whether the driver is looking forward or at a designated attention movement area (e.g., the side mirror or the rearview mirror). This allows the system to evaluate the driver's attention state in real time and flexibly adjust an EOR warning under specific conditions.

Further, the sensor unit 150 may include an indoor illuminance sensor for confirming whether an environment suitable for the driver to maintain required attention has been created. For example, when it is difficult to secure an external view due to low illuminance, the sensor unit may detect this so that a warning criterion can be adjusted and appropriate attention environment can be provided to the driver. In addition, the sensor unit 150 may monitor a vehicle speed, whether a turn signal is in operation, and the like so that whether the vehicle is in a specific driving situation such as a lane change or evasive driving can be ascertained, thereby contributing to determining whether the driver is looking at a required area according to the situation.

The driving unit 160 may include various components that provide drive power required for driving of the vehicle 10 and control the operation of the vehicle according to a command output from the control device 100. The driving unit 160 may be configured of devices that generate and transfer power for the vehicle, such as an engine, a motor, a transmission, and a wheel drive system, and a controller that controls the devices, and acceleration, deceleration, and direction change of the vehicle 10 may be performed through such components.

The driving unit 160 is controlled to be able to maintain the safety of driving by performing longitudinal control (acceleration and deceleration) and lateral control (lane maintenance and change) of the vehicle. For example, the driving unit 160 receives a command from the control device 100 and adjusts an output of the motor or a rotation speed and direction of wheels so that the vehicle can follow a driving route.

Further, the driving unit 160 may include a brake system to reduce a speed of the vehicle or stop the vehicle during driving. The driving unit 160 may control the vehicle 10 through control of an electric motor in the case of an electric vehicle or based on an engine output in the case of an internal combustion engine vehicle.

The driving unit 160 may be configured to be able to perform detailed control in order to satisfy various situational demands of the driving assistance system in a state in which the autonomous driving function is activated. For example, the driving unit 160 may receive a command output from the control device 100 according to the EOR, and adjust a speed or route of the vehicle according to an attention area that the driver needs to look (e.g., gaze) at.

FIG. 2 is an example flowchart of the control operation related to the EOR request.

In FIG. 2, the vehicle 10 may be under autonomous driving control in the system. For example, the vehicle 10 may be in a state in which the autonomous driving system or the driver control assistance system is activated. The control device 100 may confirm whether the driver is gripping the steering wheel and request hands on when the vehicle 10 is in a state of control in the system, or confirm the driver's eyes-on state to request eyes-on (e.g., eyes on the road) as needed.

The control device 100 may detect the event requiring the EOR from a driver during driving control in the vehicle system (S210).

Specifically, the control device 100 may detect whether an event requiring the driver's attention, such as a lane change request, an intersection approach, or an emergency braking situation, has occurred while the vehicle is driving in an autonomous driving state. In this situation, when a determination is made that it is essential for the driver to look forward, the control device 100 may classify the event as an EOR event and perform an additional step of confirming whether the driver is looking forward.

Various situations requiring the EOR may occur depending on not only a simple driving situation but also a driving environment and a system state. For example, a situation in which a distance to a preceding vehicle decreases rapidly during driving on a highway or it is difficult to maintain a driving lane may also be detected as the EOR event. The control device 100 may monitor such a condition in real time and provide visual and auditory warnings to the driver or prepare a preprocess to output an additional warning, if necessary.

Thus, in step S210, the control device 100 may comprehensively analyze an operating state and a driving environment of the autonomous driving system to detect a point in time when the driver's attention is required, and perform a series of control operations for confirming the driver's attention state in a subsequent step.

The control device 100 may confirm (e.g., determine whether) the driver's attention on a predetermined area if a predetermined driving condition is satisfied (S230).

In other words, the control device 100 may determine, based on a predetermined driving condition of the vehicle being satisfied, whether the driver's attention (e.g., an eye gaze of the driver) is directed (e.g., diverted) to a predetermined area (also referred to as a predetermined zone, a predetermined visual focus area or zone, a permitted area or zone, a permitted view area or zone, or a permitted viewing area or zone) of the vehicle.

In the present disclosure, a predetermined driving condition (also referred to as "attention condition," "driving-related diverted attention condition," "diverted attention condition related to a (permitted) driving activity," etc.) may be a condition in which the driver is engaged in a driving activity (e.g., permitted or legitimate driving activity) that involves (e.g., requires) the driver looking (e.g., gazing) at a specific (e.g., predetermined or permitted) area (e.g., look in a specific direction) other than the front (e.g., the road ahead and/or looking out through the windshield). This condition may include a case in which the driver's attention (e.g., diverted attention) is related to (e.g., induced by) a state of the vehicle or a state of an object adjacent to the vehicle (e.g., a target vehicle, a nearby vehicle, etc.). The permitted or legitimate driving activities may be predetermined to include, for example, a lane change, a road entry or exit, yielding to an emergency vehicle, engaging in an activity related to situational awareness (e.g., scanning the surrounding environment of the vehicle, checking the mirrors such as a rearview mirror and/or of a side-view mirror, a shoulder check, etc.), a traffic congestion, a steering override (e.g., disengaging an autonomous driving mode) by a driver, using a user interface of the vehicle, etc..

For example, the driver may need to or may be required to look (e.g., gaze) at the side mirror in a situation in which the vehicle attempts to change lanes, and this state may be detected as (e.g., considered) a predetermined driving condition. In addition, a case in which the driver needs to look (e.g., gaze) at the rearview mirror due to the approach of a following vehicle may be considered a predetermined driving condition. Further, a case in which the driver needs to look (e.g., gaze) at a specific button or a console (also referred to as a manipulation panel, a center console, a center stack, a dashboard, an automotive head unit, an infotainment system, etc.) to manipulate functions inside the vehicle may also be considered a predetermined driving condition.

To determine that the predetermined driving condition is satisfied, the control device 100 may analyze sensor data of the vehicle 10 and confirm whether a specific situation requiring the driver's attention has occurred.

For example, the control device 100 may monitor a state of the vehicle 10 to detect a change in route such as whether a lane change signal is enabled or whether the vehicle is attempting to change lanes or make a turn, and determine whether the driver needs to look (e.g., gaze) at the side mirror or rearview mirror.

Further, the control device 100 may utilize a vehicle's surroundings detection system to detect whether an external object is approaching, and determine whether the driver needs to look (e.g., gaze) at the side mirror or rearview mirror in a specific situation, such as a situation in which a vehicle in another lane is approaching or an emergency vehicle is approaching.

Further, the control device 100 may detect a situation in which the driver's attention needs to remain on a specific input interface when the driver manipulates a specific manipulation panel inside the vehicle.

Further, the control device 100 may refer to a scenario or database table that has been set in advance, in order to determine whether or not the predetermined driving condition is satisfied. For example, driving conditions such as performing a lane change or rear observation may be entered into a database table.

Thus, the control device 100 may comprehensively analyze a driving situation and a vehicle's surrounding situation, confirm whether a situation in which the driver is required to look (e.g., gaze) at a predetermined area has occurred, and regard the predetermined driving condition as being satisfied when a determination is made that the corresponding condition has been satisfied.

The storage unit 120 may store information on one or more predetermined areas inside or outside the vehicle corresponding to one or more predetermined driving conditions. The predetermined area may be an area in which a count for EOR generation is not performed (e.g., an EOR timer was paused) even when the driver looks at an area other than the front under a predetermined driving condition. For example, the predetermined area may include at least one of the side mirror (e.g., left sideview mirror and/or right sideview mirror), the rearview mirror, an input interface of the vehicle, an output device of the vehicle, and a direction of attention on an object adjacent to the vehicle.

Further, the predetermined areas may be defined differently for different predetermined driving conditions, and the control device 100 may monitor in real time whether the driver is looking at the predetermined area using a camera, an attention tracking sensor, or the like. For example, in a predetermined driving condition in which the driver attempts to change lanes, a left side mirror, a right side mirror, and/or a rearview mirror of the vehicle may be defined as preset areas.

Next, the control device 100 may determine a time condition (e.g., a timer or a time limit) for a warning of an EOR by reflecting a time at which the driver's attention on the predetermined area has been detected (S250).

For example, according to a typical EOR warning issuance process, the control device 100 may determine a time condition (e.g., a timer) for outputting the EOR warning (e.g., EOR alert) when the driver is not looking forward for a certain period of time. This time condition may be a maximum time during which the driver is allowed to look away (e.g., away from the front or away from the road ahead) before the warning (e.g., alert) is issued.

That is, if the driver does not look forward for a certain period of time or more, the control device 100 may count time (e.g., run a timer) until the EOR warning is issued, and output the EOR warning so that the driver looks forward when a predetermined period of time has elapsed.

The control device 100 may determine the time condition for outputting the EOR warning by applying (e.g., subtracting) the time (or time duration) of the driver's attention (e.g., eye gaze) being detected as being on the predetermined area (e.g., a time at which the attention has been detected or a section in which the attention has been detected). For example, when the driver looks at the side mirror for a lane change or looks at the rearview mirror for rear observation, the control device 100 may confirm a time when the attention on such a preset area is detected.

The control device 100 may pause or initialize an EOR timer by considering a time duration of the driver looking at the predetermined area to be an eyes-on state. For example, when the attention is detected while the driver is looking at the side mirror for a lane change, the control device 100 does not determine that this is not a state in which the driver is not looking forward and withholds counting (e.g., pauses the EOR timer) for warning issuance to prevent an unnecessary warning.

The control device 100 may initialize the timer to an initial value (e.g., 0) or pause the timer if a point in time when the driver looks at the predetermined area is confirmed.

Thus, if the driver looks at a predetermined area necessary for the safety of driving, the control device 100 may more flexibly apply an EOR warning issuance condition based on this, thereby improving the efficiency of the warning while maintaining the safety of driving.

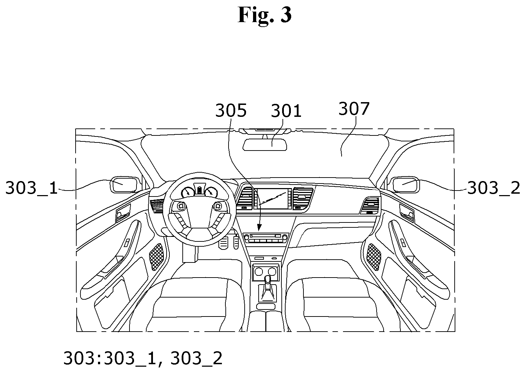

FIG. 3 is a perspective view of an example vehicle that includes one or more predetermined areas permitted for viewing.

Referring to the vehicle 10 of FIG. 3, a predetermined area other than an area of a windshield (also referred to as a front windshield) 307 may include input interface of the vehicle such as a rearview mirror 301, a left side mirror 303_1 and a right side mirror 303_2 (collectively, side mirrors 303), and a console 305. Further, the preset area may include at least one of the output device of the vehicle and a direction of attention on an object adjacent to the vehicle.

For example, the left/right side mirrors 303 and the rearview mirror 301 may be defined (e.g., classified) as predetermined areas, which are areas that the driver is required to confirm when the vehicle attempts to change lanes. Further, when the driver needs to operate a specific function inside the vehicle, the output device of the vehicle such as a manipulation panel 305 or a dashboard may also be included in (e.g., classified as) a predetermined area.

The one or more predetermined areas illustrated in FIG. 3 are merely examples and other areas may be added or changed depending on the driving situation and settings of the vehicle. For example, a direction of attention (e.g., eye gaze) on another input interface or an adjacent object (e.g., target vehicle) may also be defined as a predetermined area depending on a road situation or a driver's need.

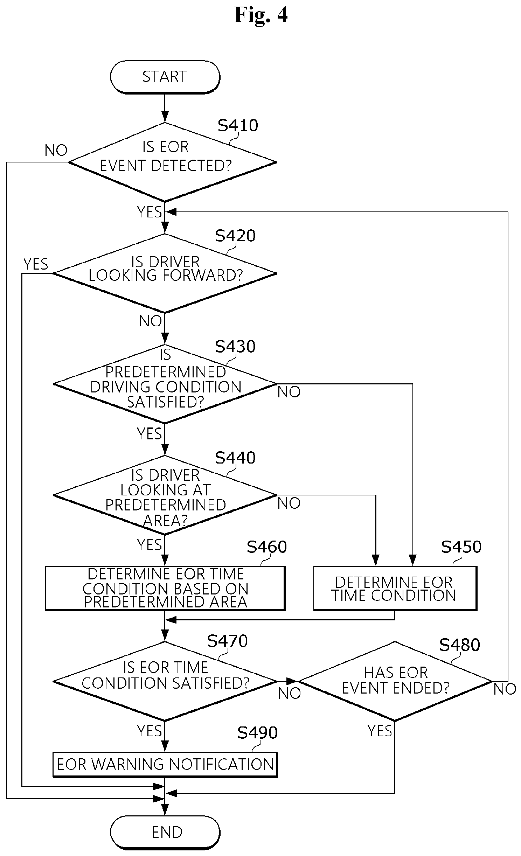

FIG. 4 is a flowchart of an example control operation related to the EOR.

In FIG. 4, the vehicle 10 may be under autonomous driving control of the system. As described above, the vehicle 10 may be in a state in which automatic control of the autonomous driving system is activated.

The control device 100 may confirm whether the event requiring the EOR is detected (S410). When the event requiring the EOR is not detected (S410: No), the operation of FIG. 4 may be ended. In this case, the control device 100 may return to a basic control state of the autonomous driving system and perform general autonomous driving control suitable for a situation in which the driver's eyes-on is not required.

When the event requiring the EOR is detected (S410: Yes), the control device 100 may confirm whether the driver is looking forward (S420).

For example, the control device 100 may detect in real time whether the driver's attention is directed forward through the attention tracking camera or sensors mounted inside the vehicle. In this case, an eyes-on state indicates that the driver's attention (e.g., eye gaze or visual focus) is fixed in a direction towards the windshield. The eyes-on state may be regarded as a basic (e.g., baseline or default) condition that is required for maintaining drive safety. The control device 100 may compare the driver's attention data with one or more predetermined eyes-on criteria. If, for example, the driver is not looking (e.g., gazing) forward (e.g., diverts the gaze away from the front of the vehicle and/or the road ahead) for a certain (e.g., threshold) period of time, the control device 100 may determine that this is the state in which the driver is not looking forward (e.g., a distraction state or an inattentiveness state).

If it is determined that the driver is looking forward (S420: Yes), the EOR request may be unnecessary, and therefore the EOR-related operation of FIG. 4 may be ended. In this case, the control device 100 may return to a general control state of the autonomous driving system, monitor the driver's eyes-on and hands-on states in real time, and continuously support main functions of the vehicle, such as lane keeping, speed adjustment, and distance maintenance.

On the other hand, when the driver does not look forward for the certain period of time or more (S420: No), the control device 100 may determine whether the predetermined driving condition is satisfied (S430).

For example, the control device 100 may analyze the driving state or driving environment of the vehicle to confirm whether the driver needs to look at an area other than the front. A predetermined driving condition may include, for example, a lane change, a road entry, a road exit, rear observation, and yielding to an emergency vehicle, as described above.

If the predetermined driving condition is not satisfied (S430: No), the control device 100 may determine the EOR time condition (e.g., set an EOR timer) (S450). Specifically, if the predetermined driving condition is not satisfied, the control device 100 may determine the EOR time condition (e.g., set the EOR timer) without considering (e.g., subtracting) any time duration during which the driver was looking away from the front (e.g., away from the road ahead) in an area that is not one of the predetermined areas (e.g., permitted view areas).

For example, when the driver does not look forward for a certain period of time, the control device 100 may determine this to be an EOR warning output condition, and confirm whether the maximum time during which the driver does not look forward, which has been set in advance, has been exceeded. This maximum time during which the driver does not look forward is set as a minimum required time during which the driver is required to look forward, and a determination is made that a warning output is necessary when the maximum time is exceeded. In this case, the control device 100 may continue EOR counting (e.g., let the EOR timer to continue to run) if the driver's attention is not directed forward because the predetermined driving condition is not satisfied for the vehicle 10 or the driver.

In the situation in which the predetermined driving condition is satisfied (S430: Yes), the control device 100 may detect whether the driver is looking at one or more predetermined areas permitted for viewing (also referred to as predetermined areas or permitted view areas or zones) (S440).

For example, the control device 100 may detect whether the driver is looking at the side mirror for a lane change or rear observation through the rearview mirror in a situation in which an emergency vehicle is approaching.

If the driver is determined to be looking at a predetermined area of the vehicle (S440: Yes), the control device 100 may determine the EOR time condition (e.g., set an EOR timer) based on the predetermined area of the vehicle (S460).

Specifically, the control device 100 may determine a time condition for a warning of an EOR (e.g., set an EOR timer) by considering a time duration during which the driver was looking at the predetermined area as an eyes-on state. For example, if the driver looks at a side mirror for a lane change, the control device 100 may classify this activity as an eyes-on state and pause or initialize (e.g., reset) the EOR timer.

Next, the control device 100 may confirm whether the EOR time condition is satisfied (S470).

When the EOR time condition is satisfied (S470: Yes), the control device 100 may output an EOR warning notification (also referred to as alert, warning, warning message, etc.) (S490). For example, the control device 100 may display a visual warning message through the cluster or the HUD inside the vehicle, or play a warning sound through the speaker to audibly alert the driver. Further, it is also possible to transmit a tactile warning by generating a vibration through the haptic module mounted on the steering wheel.

When the EOR time condition is not satisfied (S470: No), the control device 100 may confirm whether the EOR event has ended (S480). For example, the control device 100 may determine whether the driver's attention is no longer required due to completion of the lane change or a change in the driving situation.

When a determination is made that the EOR event has ended (S480: Yes), the control device 100 may initialize an EOR-related warning or EOR state and end the control flow of FIG. 4. On the other hand, when the EOR event is still in progress (S480: No), the control device 100 may continue EOR counting (e.g., let the EOR timer continue to run) by sequentially confirming the driver's attention state and whether the predetermined driving condition is satisfied, again.

If the detected event requiring the EOR from a driver is one of predetermined events, the control device 100 may determine the time condition (e.g., a timer) to be a predetermined time without a withholding process for an EOR warning. This predetermined time may be less than or equal to a default time duration value for an EOR warning timer that might have been used if the detected event was not one of the predetermined events.

Specifically, the control device 100 may determine a time condition for warning issuance to be a preset reference time when a specific event among the events requiring the EOR is detected. This event may include an emergency situation or a situation directly related to safety that may occur during driving of the vehicle, and may be preset as a situation such as obstacle detection requiring a sudden stop, occurrence of an unexpected obstacle in a driving lane, or approach of an emergency vehicle. When the control device 100 detects such an event based on sensor data, the control device 100 may not withhold the time condition for warning issuance or may set a shorter time for the timer so that the driver rapidly focuses on looking forward.

Alternatively, the control device may handle a predetermined risk event by initiating a separate, parallel warning process. This alternative process involves the processor setting a second timer, which is distinct from the primary EOR timer, to a predetermined short duration. Upon the expiration of this second timer, the device outputs a second EOR alert, which may be more urgent in nature.

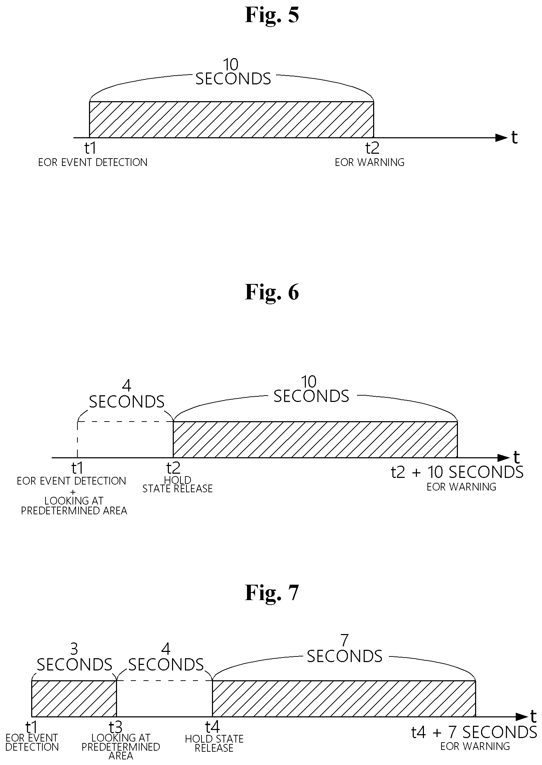

FIG. 5, FIG. 6, and FIG. 7 are time diagrams of an example control operation related to the EOR.

Referring to FIG. 5, a screen in which an EOR warning is output in a state in which the driver is not looking forward or looking at one or more predetermined areas is shown. Here, *t*1 may be a point in time when an EOR event (e.g., an automatic lane change by the system) is detected (e.g., an EOR event start time). After the EOR event is detected, the control device 100 may output an EOR warning at time t2 when a predetermined time duration (e.g., 10 seconds) has elapsed (e.g., when the EOR timer has counted down to zero) while monitoring whether the driver is looking forward or at one or more predetermined areas.

Referring to FIG. 6, a screen in which a condition for outputting an EOR warning in a state in which the driver is not looking forward but is looking at one or more predetermined areas is shown. Here, *t*1 may be a point in time when an EOR event (e.g., an automatic lane change by the system) is detected (e.g., an EOR event start time). In this case, the driver may look at a predetermined area (e.g., a side mirror) under the predetermined driving condition.

Since it is detected at time *t*1 that the driver is looking at one or more predetermined view areas, the control device 100 may temporarily withhold the start (e.g., initiation) of a timer for an EOR warning and temporarily defers the determination of the time condition for the EOR warning issuance. For example, the control device 100 may start a clock without determining a duration for the timer, and apply the elapsed time of the clock to the timer once the duration for the timer is determined.

After a certain amount of time (e.g., four seconds), a withhold condition (also referred to as a hold condition) may be released at time t2 if the driver continues to not look forward, and the control device 100 may restart the EOR warning timer at time *t*2*.* If the EOR warning issuance condition is satisfied (e.g., at time *t*2 *+* 10 seconds) after a specific (e.g., threshold) time amount (e.g., 10 seconds) has elapsed since time t2, the control device 100 may output an EOR warning to request the driver to look forward.

FIG. 7 shows a state in which, in the situation of FIG. 6, the driver is initially not looking forward (e.g., looking away from the front or not looking out through the windshield) but looking at an area that is also not a predetermined area, but the driver looks at one or more predetermined areas before the EOR event ends. For example, at time *t*1, the EOR event (e.g., an automatic lane change by the system) may be detected. At time *t*1, the timer for an EOR warning may start and continue until time t3 while the driver is not looking forward (e.g., not looking out through the windshield).

When it is detected at time t3 that the driver is looking at a predetermined area of the vehicle (e.g., a side mirror or a rearview mirror), the control device 100 may temporarily pause the EOR timer in a withhold state (also referred to as a hold state). This withhold state may be maintained until the driver's attention (e.g., eye gaze) leaves the predetermined area or the withhold condition is released at time t4.

When the withhold state is released at time t4, the control device 100 may restart the EOR timer, and output the EOR warning when the remaining duration of the timer expires (e.g., seven seconds have additionally elapsed since time t4, that is, at time t4 + 7 seconds). Accordingly, a warning of an EOR may be generated for the driver (e.g., at a moment when the timer expires).

Meanwhile, it is shown in FIG. 7 that the EOR warning is output after the remaining seven seconds have elapsed from time t4, excluding three seconds from t1 to t3 out of a specific time of 10 seconds, but a new timer (e.g., 10-second timer) may start at time t4 and then the EOR warning may be output depending on a system setting. Alternatively, the timer may stop at time t3 (e.g., and reset for a future EOR event). This is intended to manage the warning more flexibly so that measures can be taken based on the convenience and safety of the driver.

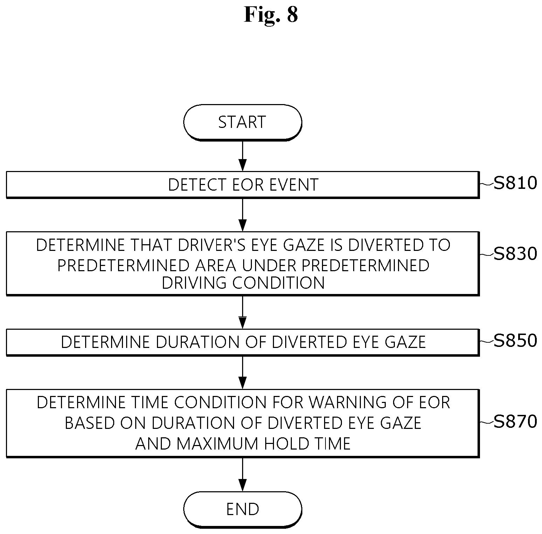

FIG. 8 is a flowchart of an example control operation related to the EOR. FIG. 8 discloses the content of determining an EOR warning condition based on the maximum withholding time.

The control device 100 may detect an EOR event (S810) and determine that the driver's eye gaze is diverted to the predetermined area under a predetermined driving condition (S830). The control device 100 may confirm (e.g., determine) a duration (e.g., time duration) of the driver's eye gaze being diverted to a predetermined area (S850).

The control device 100 may determine the time condition (e.g., set a timer) for a warning of an EOR based on the duration of the driver's diverted eye gaze and the maximum withholding time (S870).

For example, if the driver looks at the predetermined area such as a side mirror or a rearview mirror under the predetermined driving condition, the control device 100 may record a time duration of the attention (e.g., eye gaze) on the predetermined area and apply (e.g., subtract) that time duration in determining a duration of an EOR timer. In this case, the control device 100 may pause the warning counting while the driver is looking at a predetermined area by applying the maximum withholding time, but limits a suspension time so that the suspension time does not exceed the maximum withholding time.

That is, even if the driver looks at a predetermined area for a certain period of time under the predetermined driving condition, and if the time exceeds the maximum withholding time, the control device 100 may no longer maintain the withhold state and resume the EOR timer. Accordingly, it is possible to induce the driver to return to looking forward after a certain period of time while preventing unnecessary warnings.

Thus, the control device 100 may perform flexible EOR warning control under the predetermined driving condition based on the maximum withholding time, thereby simultaneously considering the convenience and safety of the driver's driving.

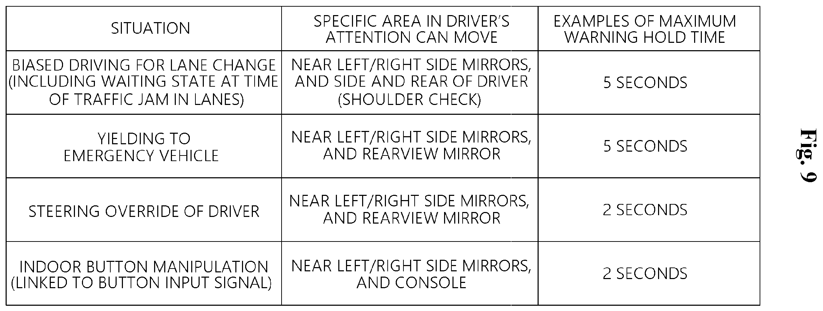

FIG. 9 is a table showing example maximum withholding times. As illustrated in FIG. 9, an area in which the driver's attention can move and a corresponding maximum warning withholding time may be set differently depending on the driving situation.

For example, when biased driving for a lane change is performed, the driver's attention is allowed to move to left/right side mirrors and the rear, and in this case, the maximum withholding time may be set to five seconds. Further, in a yielding driving situation for an emergency vehicle, attention movement to the left/right side mirrors and the rearview mirror is similarly possible, and the maximum withholding time is set to five seconds.

Meanwhile, when the driver performs a steering override, the driver may look at the side mirrors and the rearview mirror, and the maximum withholding time in this case may be set as short as two seconds. Finally, in the indoor button manipulation situation, the driver may look at the console 305 (e.g., a switch, a knob, a button, a slider, etc.) as well as the left/right side mirrors, and in this case, the maximum withholding time is set to two seconds.

The content of FIG. 9 is provided as an example, and the present disclosure is not limited thereto. For example, an attention movement area and the withholding time may be adjusted in various ways depending on a driving situation or system settings. For example, the maximum withholding time may be set to be longer or shorter depending on a specific environment, road conditions, or an autonomous driving level of the vehicle, and other input devices and nearby objects may be added as the attention movement area.

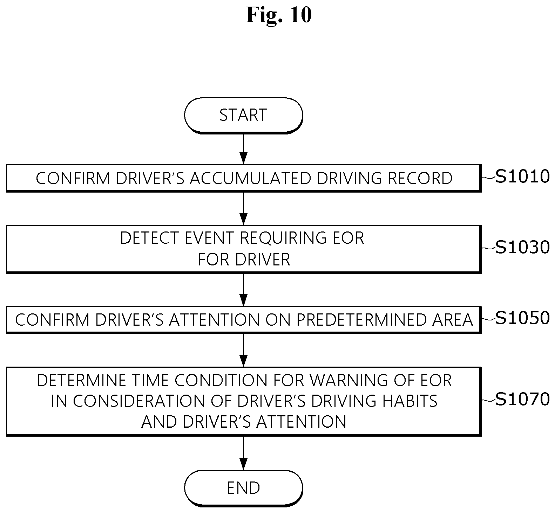

FIG. 10 is a flowchart of an example control operation related to the EOR. FIG. 10 is characterized by flexibly adjusting the time condition of the warning of an EOR by accounting for the driver's driving history (e.g., the driver's driving habits).

The control device 100 may confirm the driver's accumulated driving record (e.g., driving history) (S1010). For example, the control device 100 may ascertain the driver's driving habits by analyzing an average time during which the driver maintained eyes-on in past driving or an attention movement pattern in the specific driving situation. Such information may be used to adjust an EOR warning criterion by accounting for the characteristics of individual drivers.

The control device 100 may detect the event requiring the EOR for a driver (S1030) and may confirm, under the predetermined driving condition, the driver's attention on a predetermined area that is determined in advance (S1050).

Next, the control device 100 may determine the time condition for a warning of an EOR based on the driver's driving habits and the driver's attention (S1070).

Specifically, the control device 100 may confirm the driver's accumulated driving record and determine the time condition for a warning of an EOR differently based on the confirmed driving record.

For example, when past driving records indicate that the driver tends to consistently look forward, the control device 100 may flexibly cope according to a driver's driving pattern by setting a somewhat long warning time. On the other hand, when it is confirmed that the time in which the driver looks forward during driving tends to be insufficient, the control device 100 may set a short warning time to rapidly draw attention.

Thus, the control device 100 may provide more accurate EOR warnings suitable for an individual driver by accounting for the driver's historical driving habits.

According to an aspect of the present disclosure, there is a provided a control device including: a memory; and a processor electrically or adaptively connected to the memory, wherein the processor is configured to detect an event requiring an EOR for a driver during driving control in a vehicle system, confirm the driver's attention on a specific area when a preset condition is satisfied, and determine a time condition for a warning of the EOR based on a time at which the attention on the specific area is detected.

In the control device according to some aspects, the preset condition may include: a case in which it is detected that the driver is looking at an area other than a front windshield; and a case in which a preset attention condition is satisfied and the driver is therefore required to look at a specific area other than the front during driving of the vehicle.

In the control device according to some aspects, the specific area may include at least one of a side mirror, a rearview mirror, an input means of the vehicle, an output means of the vehicle, or a direction of attention on an object adjacent to the vehicle.

In the control device according to some aspects, the processor may be configured to perform count for the warning of the EOR, excluding a time when the driver's attention on the specific area is detected.

In the control device according to some aspects, the processor may be configured to exclude the time when the driver's attention on the specific area is detected from a preset maximum hold time limit.

In the control device according to some aspects, the maximum hold time may be applied depending on the specific area.

In the control device according to some aspects, the processor may be configured to perform the count from a point in time when the detection of the driver's attention ends or pause the count while the driver's attention is detected and then resume the count.

In the control device according to some aspects, the processor may be configured to output a state related to the count for the EOR for the driver through an input/output interface of the vehicle.

In the control device according to some aspects, the processor may be configured to confirm the driver's accumulated driving record and determine the time condition for the warning of the EOR based on the confirmed driving record.

In the control device according to some aspects, the processor may be configured to determine the time condition to be a preset time when the detected event requiring the EOR for a driver is a preset event.

In the control device according to some aspects, the processor may be configured to initialize or not to perform the count for the warning of the EOR when the driver's attention on the specific area is detected.

According to an aspect of the present disclosure, there is a provided a method for controlling a vehicle, including: detecting an event requiring an EOR for a driver during driving control in a vehicle system; confirming the driver's attention on a specific area when a preset condition is satisfied; and determining a time condition for a warning of the EOR based on a time at which the attention on the specific area is detected.

In the method according to some aspects, the preset condition may include: a case in which it is detected that the driver is looking at an area other than a front windshield; and a case in which a preset attention condition is satisfied and the driver therefore is required to look at a specific area other than the front during driving of the vehicle.

In the method according to some aspects, the specific area may include at least one of a side mirror, a rearview mirror, an input means and an output means of the vehicle, and a direction of attention on an object adjacent to the vehicle.

In the method according to some aspects, the determining of the time condition for the warning of the EOR may include performing count for the warning of the EOR, excluding a time when the driver's attention on the specific area is detected.

In the method according to some aspects, the performing of the count for the warning of the EOR may include excluding the time when the driver's attention on the specific area is detected from a preset maximum hold time limit.

In the method according to some aspects, the maximum hold time may be applied depending on the specific area.

In the method according to some aspects, the performing of the count for the warning of the EOR may include performing the count from a point in time when the detection of the driver's attention ends, or pausing the count while the driver's attention is detected and then resuming the count.

The method according to some aspects may further include outputting a state related to the count for the EOR for the driver through an input/output interface of the vehicle.

The method according to some aspects may further include confirming the driver's accumulated driving record, wherein the determining of the time condition for the warning of the EOR may include determining the time condition for the warning of the EOR based on the driver's accumulated driving record.

In the method according to some aspects, the determining of the time condition for the warning of the EOR may include determining the time condition to be a preset time when the detected event requiring the EOR for a driver is a preset event.

In the method according to some aspects, the determining of the time condition for the warning of the EOR may include initializing or not performing the count for the warning of the EOR when the driver's attention on the specific area is detected.

Through one or more example embodiments of the present disclosure described herein, it is possible to flexibly set warning conditions and minimize unnecessary warnings by comprehensively considering various driving situations, a driver's attention state, driving habits, and the like. This allows the driver to reduce distractions due to unnecessary warnings while maintaining the safety of driving, and allows the vehicle system to provide an optimized attention request to each driver.

The term "unit" as used in one or more example embodiment means a software or hardware component such as a field-programmable gate array (FPGA) or an ASIC, and a "unit" performs a certain role. However, a "unit" is not limited to software or hardware. A "unit" may be configured to reside on an addressable storage medium or may be configured to operate one or more processors. Accordingly, for example, a "unit" includes components such as software components, object-oriented software components, class components, and task components, processes, functions, attributes, procedures, subroutines, segments of program code, drivers, firmware, microcode, circuits, data, databases, data structures, tables, arrays, and variables. Functions provided in the components and the "units" may be combined into a smaller number of components and "units" or may be further separated into additional components and "units." In addition, the components and "units" may be implemented to operate one or more central processing units (CPUs) in a device or a secure multimedia card. The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an EEPROM, a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a compact disc ROM (CD-ROM) or a digital video disc (DVD), magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

According to the present disclosure, even when the driver's attention is directed to a specific area other than the front during operation of the autonomous driving system, it is possible to prevent an unnecessary warning of an EOR by applying a flexible eyes-on determination criterion suitable for the driving situation.

The effects of the present disclosure are not limited to the effect mentioned above, and other effects that have not been mentioned can be clearly understood by those skilled in the art from the description below.

Although the present disclosure has been described above with reference to one or more example embodiments, it will be understood by those skilled in the art that various modifications and changes can be made to the present disclosure without departing from the spirit and scope of the present disclosure set forth in the following claims.

## Claims

1. A control device comprising:
a processor; and
a memory storing at least one instruction that is configured, when executed by the processor communicating with the memory, to cause the control device to:
detect, during driving control of a vehicle, an event associated with an eyes-on request (EOR) for a driver of the vehicle;
determine, based on the event satisfying a predetermined driving condition of the vehicle and via an image sensor of the vehicle, that an eye gaze of the driver is diverted to a predetermined area of the vehicle;
set, based on a time duration of the eye gaze of the driver being diverted to the predetermined area, a timer for an EOR alert, wherein an expiration of the timer is associated with the predetermined area; and
output, based on expiration of the timer, the EOR alert via an output device of the vehicle, wherein the output device comprises at least one of a display of the vehicle or a speaker of the vehicle.

2. The control device of claim 1, wherein the predetermined driving condition comprises a condition in which the driver is permitted to divert the eye gaze from a front of the vehicle to the predetermined area of the vehicle.

3. The control device of claim 1 or 2, wherein the predetermined area of the vehicle comprises at least one of: a side mirror of the vehicle, a rearview mirror, an input interface, the output device, or a direction of attention on an object adjacent to the vehicle.

4. The control device of anyone of claims 1-3, wherein the at least one instruction is configured, when executed by the processor communicating with the memory, to further cause the control device to: pause, for the time duration, the timer, wherein, optionally, the at least one instruction is configured, when executed by the processor communicating with the memory, to further cause the control device to:
perform one of:
starting the timer at an end of the time duration; or
pausing the timer for the time duration and resuming the timer at the end of the time duration.

5. The control device of anyone of claims 1-4, wherein the at least one instruction is configured, when executed by the processor communicating with the memory, to further cause the control device to:
pause the timer for a lesser of: the time duration and a maximum withholding time limit, wherein, optionally, the at least one instruction is configured, when executed by the processor communicating with the memory, to further cause the control device to: determine, based on the predetermined area, the maximum withholding time limit.

6. The control device of anyone of claims 1-5, wherein the at least one instruction is configured, when executed by the processor communicating with the memory, to further cause the control device to:
output, via a user interface of the vehicle, a remaining duration of the timer.

7. The control device of anyone of claims 1-6, wherein the at least one instruction is configured, when executed by the processor communicating with the memory, to cause the control device to set the timer by:
setting the timer further based on a driving history of the driver.

8. The control device of anyone of claims 1-7, wherein the at least one instruction is configured, when executed by the processor communicating with the memory, to further cause the control device to:
set, based on detecting one or more predetermined events, a second timer, for a second EOR alert, to a predetermined time; and
output, based on expiration of the second timer, the second EOR alert.

9. The control device of anyone of claims 1-8, wherein the at least one instruction is configured, when executed by the processor communicating with the memory, to further cause the control device to:
perform, at a start of the time duration, one of: resetting the timer or pausing the timer.

10. A method performed by an apparatus of a vehicle, the method comprising:
detecting, during driving control of the vehicle, an event associated with an eyes-on request (EOR) for a driver;
determining, based on the event satisfying a predetermined driving condition of the vehicle and via an image sensor of the vehicle, that an eye gaze of the driver is diverted to a predetermined area of the vehicle, wherein, optionally, the predetermined driving condition comprises a condition in which the driver is permitted to divert the eye gaze from a front of the vehicle to the predetermined area of the vehicle;
setting, based on a time duration of the eye gaze of the driver being diverted to the predetermined area, a timer for an EOR alert, wherein an expiration of the timer is associated with the predetermined area; and
output, based on expiration of the timer, the EOR alert via an output device of the vehicle, wherein the output device comprises at least one of a display of the vehicle or a speaker of the vehicle.

11. The method of claim 10, further comprising:
pausing, for the time duration, the timer,
wherein the predetermined area of the vehicle comprises at least one of: a side mirror of the vehicle, a rearview mirror, an input interface, the output device, or a direction of attention on an object adjacent to the vehicle,
wherein, optionally, the method further comprises: performing one of:
starting the timer at an end of the time duration; or
pausing the timer for the time duration and resuming the timer at the end of the time duration.

12. The method of claim 10 or 11, further comprising:
pausing the timer for a lesser of: the time duration and a maximum withholding time limit, wherein, optionally, the method further comprises:
determining, based on the predetermined area, the maximum withholding time limit.

13. The method of anyone of claims 10-12, further comprising:
outputting, via a user interface of the vehicle, a remaining duration of the timer.

14. The method of anyone of claims 10-13, wherein the setting of the timer comprises:
setting the timer further based on a driving history of the driver.

15. The method of anyone of claims 10-14, further comprising:
setting, based on detecting one or more predetermined events, a second timer, for a second EOR alert, to a predetermined time; and
outputting, based on expiration of the second timer, the second EOR alert.
